# EUROPEAN PATENT SPECIFICATION

(11) **EP 3 352 422 B1**
(45) Date of publication and mention of the grant of the patent: **08.04.2020**
(21) Application number: 18153041.1
(22) Date of filing: 23.01.2018
(51) Int. Cl.: H04L 12/28, G05B 15/02, G05B 15/00

(54) **CONFIGURATION OF PROGRAMMED BEHAVIOR IN ELECTRICAL SYSTEM**
KONFIGURATION VON PROGRAMMIERTEM VERHALTEN IN ELEKTRISCHEM SYSTEM
CONFIGURATION DE COMPORTEMENT PROGRAMMÉ DANS UN SYSTÈME ÉLECTRIQUE

(30) Priority: 24.01.2017 BE 201705038
(43) Date of publication of application: 25.07.2018
(73) Proprietor: Niko NV, 9100 Sint-Niklaas (BE)
(72) Inventor: VELDEMAN, Pol, 9140 Temse (BE); VAN OVERLOOP, Isabelle, 9032 Wondelgem (BE); ZWANCKAERT, Stijn, 9770 Kruishoutem (BE)
(74) Representative: DenK iP

(56) References cited:
- EP-A1- 2 482 150
- EP-A1- 2 482 152
- US-A1- 2017 005 818

## Description

### Field of the invention

The invention relates to the field of automated electrical systems for buildings. More specifically it relates to a processing unit for controlling a programmable electrical system of a building, a programmable electrical system comprising such processing unit, a method for configuring a programmable electrical system in a building and a related computer program product.

### Background of the invention

It is known in the art to use software-controlled automation systems in buildings. For example, the European patent application EP 2 482 152 discloses a method that allows an installer to program the operation of such automation system. In accordance with such method, actions may be defined to link the behavior of controllable elements of the automation system to predetermined triggers or inputs associated with elements of the automation system. For example, a layout of the building may be entered in a software system, and various input and output units, as well as programmed actions thereof, can be added to the layout.

By using such software interface, installers may be more motivated to experiment with a wide range of available functions. Nevertheless, various intrinsic features of the software may be rarely used, for example due to a lack of familiarity of the installer with less used options and/or due to complex combinations of automation system elements and associated actions that are required to perform a specific function, e.g. because such input units, output units and programmed actions all need to be defined or added separately.

EP 2 482 150 discloses a device for configuring a programmable electrical system in a building. This electrical system comprises at least one output unit and at least one input unit, and a storage means comprising a library of predefined actions. Each action defines a behaviour of one or more output units as a function of a status of one or more input units. For each action, a corresponding description and the one or more output units and one or more input units associated therewith are stored. An interaction means is furthermore arranged to communicate an overview of at least a part of the actions to a user, to have a user select one of the respective actions, and, after selecting a particular action by the user, to communicate the description thereof to a user.

Document US 2017/005818 A1 shows a home automation system having addressable devices and a device scene controller, presenting a first user-selectable list of addressable devices capable of implementing a first desired scene.

### Summary of the invention

The invention is defined as a processing unit according to claim 1 and as a method according to claim 14, and as a computer program product according to claim 15.Various embodiments are defined by the claims. Claim 13 defines a programmable electrical system comprising the processing unit of claim 1.

It is an object of embodiments of the present invention to provide good and efficient means and methods for allowing a user to configure and/or reconfigure an automated electrical system of a building.

It is an advantage of embodiments of the present invention that use-case scenarios can be easily configured in an automated electrical system, even when such use-case requires various different types of addressable elements in the automated electrical system, multiple interrelated actions, virtual inputs and/or virtual outputs.

It is an advantage of embodiments of the present invention that an easy and fast interface can be provided to allow an installer to configure an automated electrical system of a building.

It is an advantage of embodiments of the present invention that an automated electrical system can be easily updated, finetuned and/or changed by an installer, or even by an end-user, e.g. after deployment of the system.

It is an advantage of embodiments of the present invention that an automated electrical system can be easily controlled by providing an input trigger to a complex use-case scenario, e.g. in which the resultant behavior of the automated electrical system depends on internal variable states and/or involves nonlinear and/or non-Boolean processing of the related input states.

It is an advantage of embodiments of the present invention that an automated electrical system can be easily controlled, e.g. by providing an input trigger to a use-case scenario via a user interface, such as a web-based interface, a dedicated app for a mobile phone or tablet device, and/or an application-specific interface, such as a dedicated touch screen.

It is an advantage of embodiments of the present invention that a library of use-case scenarios is provided that can be easily extended by new use-case scenarios and/or in which use-case scenarios can be easily updated, e.g. without requiring an update of software for rendering an interaction interface that uses this library.

It is an advantage of embodiments of the present invention that flexibility is provided in developing such use-case scenarios, e.g. allowing fast development iterations that can be incrementally tested and/or deployed on live systems.

It is an advantage of embodiments of the present invention that compartmentalization is provided between the development of core software for rendering a user interface and/or for controlling an automated electrical system and development of use-case scenarios defined by interrelated actions involving components of such automated electrical system. It is a further advantage that use-case scenarios can be developed, e.g. by installers, field-testers, customer support agents or hobbyist developers, without compromising the integrity of the core user interface software and/or the core control software of such electrical system.

It is an advantage of embodiments of the present invention that use-case scenarios can be reused in different automated electrical systems, e.g. can be shared between installers and/or end-users.

The above objective is accomplished by a method and device according to the present invention.

In a first aspect, the present invention relates to a processing unit for controlling a programmable electrical system of a building, in which the electrical system comprises a plurality of addressable elements. The processing unit comprises a storage medium that comprises a library of use-case scenarios. Each use-case scenario comprises a definition of a plurality of types of elements required for that use-case scenario. Each use-case scenario further comprises a plurality of interrelated actions defining behaviors of elements of said types. Each action defines a behavior of at least one of the elements acting as an output node as a function of a status of at least one of the elements acting as an input node.

The processing unit further comprises an interaction interface for presenting an overview of at least a part of the use-case scenarios in the library to a user, for receiving an input from the user to select one of the presented use-case scenarios and for configuring an instance of the selected use-case scenario by interactively presenting the user with choices and/or options relating to the use-case scenario. For each use-case scenario, the plurality of types of elements comprises at least two of a virtual input node, a virtual output node and/or a type of addressable element of the programmable electrical system that is capable of acting as an input node and/or an output node. For example, the plurality of types may comprise at least one type of addressable element of the programmable electrical system (that is capable of acting as an input node) and/or at least one virtual input node. The plurality of types may also comprise at least one type of addressable element of the programmable electrical system (that is capable of acting as an output node) and/or at least one virtual output node.

The interaction interface is also adapted for configuring a link between a virtual output node and a virtual input node for routing state information between the instance of the selected use-case scenario and another instance of one of said use-case scenarios, e.g. an output of a virtual output node of a first instance of a use-case scenario linked as an input to a virtual input node of a second instance of a use-case scenario, e.g. in which both instances may be instances of the same or of different use-case scenarios. Thus, the 'virtual' input node may be characterized by its suitability for being configured as input of such link, and the 'virtual' output node may be characterized by its suitability for being configured as output of such link.

For example, the use-case scenario may comprise a definition of at least one internal variable, e.g. at least one internal variable to be instantiated in accordance with the definition for each instantiation of the use-case scenario, that is declared readable from instances of other use-case scenarios, in which the at least one internal variable, e.g. its runtime instantiated value, is exposed in the form of a virtual output node.

In a processing unit in accordance with embodiments of the present invention, a use-case scenario may also comprise a definition of a at least one type of elements that can be optionally used for that use-case scenario.

In a processing unit in accordance with embodiments of the present invention, a use-case scenario may also comprise a definition of an allowed number of, or an allowed range for the number of, elements of at least one type that are required for and/or that can be optionally used for that use-case scenario.

In a processing unit in accordance with embodiments of the present invention, the interaction interface may be adapted for presenting a representation of a layout of the programmable electrical system to the user.

In a processing unit in accordance with embodiments of the present invention, the interaction interface may be adapted for communicating the plurality of types of elements required for the selected use-case scenario to the user.

In a processing unit in accordance with embodiments of the present invention, the interaction interface may be adapted to receive an input from the user to select elements in the representation of the layout that correspond to each type of the plurality of types of elements required for the selected use-case scenario.

In a processing unit in accordance with embodiments of the present invention,the interaction interface may be adapted for providing a description of the plurality of types of elements to the user to describe a function, a use, an appearance and/or possible embodiments of the type, e.g. exemplary elements of the type.

In a processing unit in accordance with embodiments of the present invention, the library may comprise, for at least one use-case scenario, a definition of at least one internal variable used for implementing the plurality of interrelated actions of that at least one use-case scenario.

In a processing unit in accordance with embodiments of the present invention, the library may comprise, for at least one use-case scenario, a definition of at least one parameter used for implementing the plurality of interrelated actions of the at least one use-case scenario.

In a processing unit in accordance with embodiments of the present invention, the library may comprise, for at least one use-case scenario, an executable code for implementing at least one action of the interrelated actions defining the behavior.

In a processing unit in accordance with embodiments of the present invention, the library may comprise, for at least one use-case scenario, a descriptive part for defining an interface for describing how the user can interact with the use-case scenario through the interaction interface, and an algorithmic part comprising the executable code.

A processing unit in accordance with embodiments of the present invention may comprise a control program for controlling the plurality of addressable elements of the programmable electrical system, in which the control program may be configured by the interaction interface.

In a processing unit in accordance with embodiments of the present invention, the algorithmic part may be executed, in operation of the electrical system, by the processing unit when called by the control program.

In a processing unit in accordance with embodiments of the present invention, the control program may be adapted for providing a state corresponding to a virtual output node of a first instance of a use-case scenario as input to a virtual input node of a second instance of the same or a different use-case scenario.

In a processing unit in accordance with embodiments of the present invention, each use-case scenario may comprise a description thereof. Furthermore, the interaction interface may be adapted for communicating the description of the selected use-case scenario to the user.

Embodiments of the present invention may also relate to a programmable electrical system comprising a plurality of addressable elements and a processing unit in accordance with embodiments of the present invention for controlling the programmable electrical system.

In a second aspect, the present invention also relates to a method for configuring a programmable electrical system in a building, in which the electrical system comprises a plurality of addressable elements and a processing unit for controlling the programmable electrical system. The method comprises accessing a digital library of use-case scenarios. Each use-case scenario comprises a definition of a plurality of types of elements required for that use-case scenario. Each use-case scenario comprises a plurality of interrelated actions defining behaviors of elements of said types. Each action defines a behavior of at least one of the elements acting as an output node as a function of a status of at least one of the elements acting as an input node. The method also comprises presenting an overview of at least a part of the use-case scenarios in the digital library to a user. The method comprises receiving an input from the user to select one of the presented use-case scenarios and configuring an instance of the selected use-case scenario by interactively presenting the user with choices and/or options relating to the use-case scenario. For each stored use-case scenario, the plurality of types of elements comprises at least two of a virtual input node, a virtual output node and/or a type of addressable element of the programmable electrical system that is capable of acting as an input node and/or an output node.

The method also comprises configuring at least one link between at least one virtual output node and at least one virtual input node for routing state information between the instance of said selected use-case scenario and another instance of one of said use-case scenarios. For example, the method may comprise receiving an input from the user to select another of the presented use-case scenarios and configuring another instance of the other selected use-case scenario by interactively presenting the user with choices and/or options relating to the use-case scenario.

In a method in accordance with embodiments of the present invention, the step of configuring may comprise receiving an input from the user to configure a parameter value of a parameter of the selected use-case scenario, in which the parameter may be defined by a definition stored in the digital library for the use-case scenario.

In a method in accordance with embodiments of the present invention, the step of configuring may comprise presenting a representation of a layout of the programmable electrical system to the user, communicating the plurality of types of elements required for the selected use-case scenario to the user, and receiving an input from the user to select elements in the representation of the layout that correspond to each type of the plurality of types of elements required for the selected use-case scenario.

In a method in accordance with embodiments of the present invention, the digital library may comprise, for at least one use-case scenario, an executable code for implementing at least one action of the interrelated actions defining the behavior, and the method may comprise controlling the plurality of addressable elements of the programmable electrical system in accordance with the configured instance.

In a third aspect, the present invention also relates to a computer program product adapted for executing the steps of a method in accordance with an embodiment of the second aspect of the present invention when the computer program product is run on a computer.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates a programmable electrical system of a building in accordance with embodiments of the present invention.
FIG. 2 schematically illustrates a processing unit in accordance with embodiments of the present invention.
FIG. 3 illustrates an exemplary user interface screen relating to embodiments of the present invention.
FIG. 4 shows a list presented in the form of a tree having an expanded node in an exemplary user interface screen relating to embodiments of the present invention.
FIG. 5 shows another expanded node in an exemplary user interface screen relating to embodiments of the present invention.
FIG. 6 shows a representation of a layout of the programmable electrical system in an exemplary user interface screen relating to embodiments of the present invention.
FIG. 7 illustrates a state corresponding to a virtual output node of a first instance of a use-case scenario being provided as an input to a virtual input node of a second instance of a use-case scenario, in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a processing unit for controlling a programmable electrical system of a building. The electrical system comprises a plurality of addressable elements.

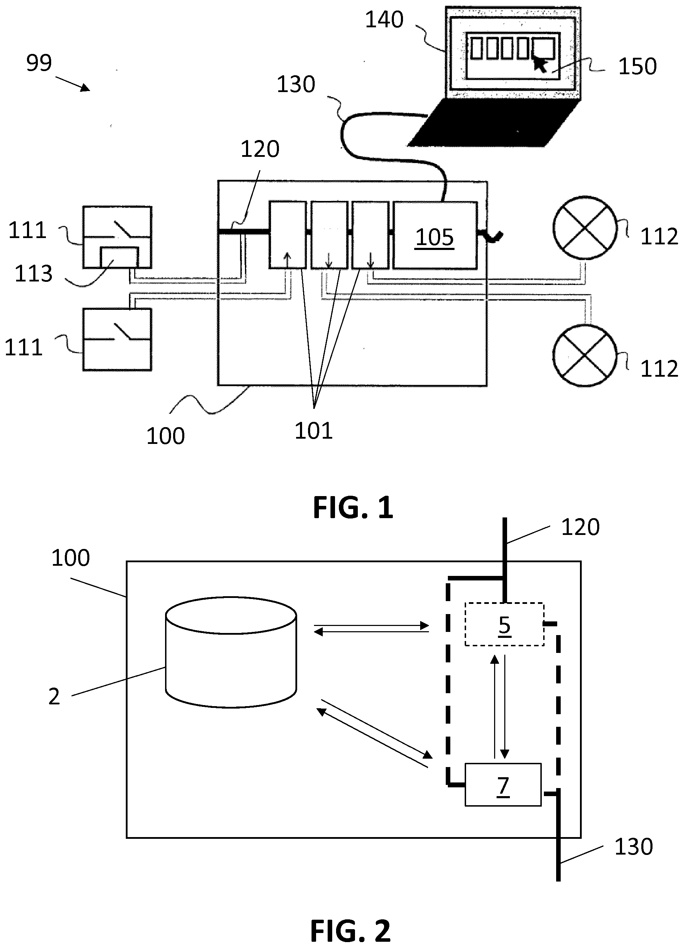

Referring to FIG. 1, embodiments of the present invention may also relate to the programmable electrical system 99 comprising the plurality of addressable elements 111,112 and a processing unit 100 in accordance with embodiments of the present invention. For example, such programmable electrical system 99 may comprise a communication infrastructure for relaying control information from an addressable element 111 having input capabilities to the processing unit 100 and from the processing unit 100 to an addressable element 112 having output capabilities.

The processing unit 100 may comprise one or more centralized or decentralized processors 105. The processing unit 100 may comprise a communication bus 120. An addressable element 111,112 may be operably connected to the communication bus 120, e.g. by a communication module 113 integrated in the addressable element 111. An addressable element 111,112 may be connected to, e.g. wired directly to, an input/output module 101 for providing an interface between the addressable element 111,112 and the communication bus 120.

For example, the processing unit 100 may comprise, or may be comprised in, a central control box. An input/output module 101 may also be comprised in such central control box.

For example, the processing unit 100 may be configured using a configuration terminal 140, e.g. a personal computer, a smartphone, a tablet or a dedicated touch screen device. For example, a data communication network 130, e.g. a wired or wireless Ethernet connection, may connect the processing unit 100 to the configuration terminal 140. The processing unit 100 may for example render a graphical user interface 150 on the configuration terminal 140.

FIG. 2 schematically illustrates a processing unit 100 in accordance with embodiments of the present invention.

The processing unit 100 comprises a storage medium 2, such as a data memory, e.g. a RAM, ROM or FLASH memory, a solid state hard disk, a magnetic storage hard disk, or similar media suitable for storing digital data in a readily accessible manner to enable the processing unit 100, e.g. a central processing unit or distributed processing unit to read the stored data on the storage medium 2.

The processing unit 100 may comprise a control program 5 for controlling the plurality of addressable elements 111,112 of the programmable electrical system 99, in which the control program 5 may be configured by the interaction interface, as described further hereinbelow. The control program 5 may be configured to interact with the plurality of addressable elements 111,112 using the communication bus 120.

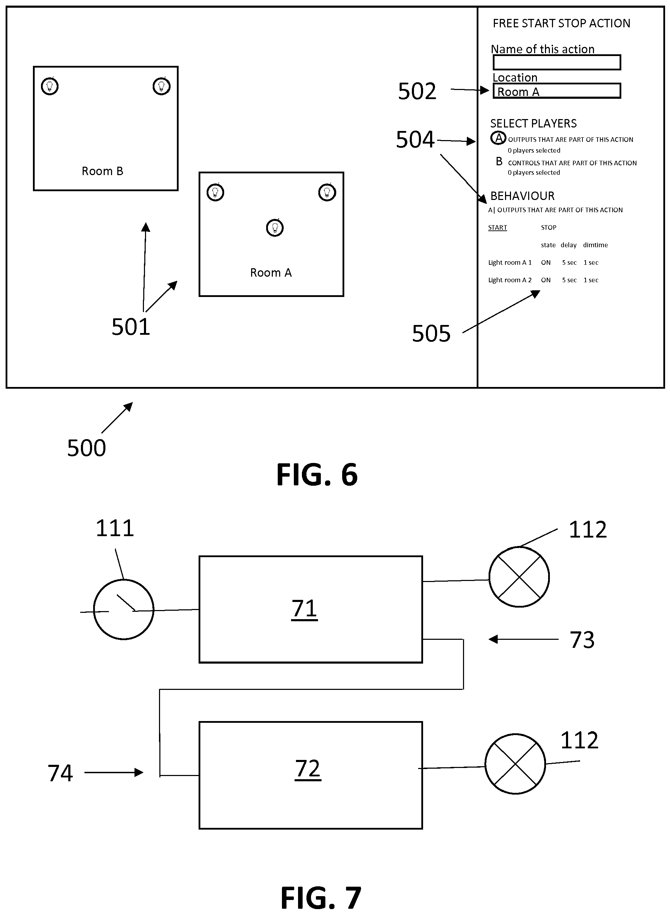

In embodiments in accordance with the present invention, the control program 5 may be adapted for providing a state corresponding to a virtual output node of a first instance of a use-case scenario as an input to a virtual input node of a second instance of a use-case scenario, e.g. in which both instances may be instances of the same or of different use-case scenarios. For example, a link between a virtual output node and a virtual input node may be configured using the interaction interface, as described further hereinbelow. For example, referring to FIG. 7, program logic, e.g. an algorithm, associated with a first use-case scenario 71 may generate an output that can be made available to a second use-case scenario 72 in the form of a input for program logic associated with the second use-case scenario. This relation between instances of respectively the first use-case scenario and the second use-case scenario may be configured by connecting a virtual output node 73, representative of the output generated by the program logic of the first use-case scenario 71, to a virtual input node 74 for the second use-case scenario 72.

The processing unit 100 comprises a storage medium 2 that comprises a library of use-case scenarios. A use-case scenario may relate to a data construct, e.g. a combined data and software construct, for combining logic and configurable properties to provide an easy to use interface, e.g. a wizard or guided action. The selection of such use-case scenario in the interaction interface 7 may create an instance of such use-case scenario, e.g. may associate the use-case scenario with suitable addressable elements 111,112 in the programmable electrical system 99 and may optionally configure parameters for finetuning the behavior of the instantiated use-case scenario. The control program 5 may be adapted for executing program logic associated with a use-case scenario, in which this program logic is executed by applying inputs and/or outputs of the addressable elements 111,112 associated with the program logic in accordance with an instance thereof, by applying parameter values that are assigned to parameters of the use-case scenario in accordance with the instance, by keeping track of internal variables assigned to the use-case scenario instance and/or by routing state information between instances of use-case scenarios using links between virtual input nodes and virtual output nodes.

A use-case scenario may, for example, relate to a mood behavior, or a meta-level mood selection, e.g. a mood of moods behavior. In another example, a use-case scenario may relate to a basic all-off action, for powering down all relevant controllable devices, e.g. turning off lights, media devices, cooking appliances and/or closing curtains or shutters. A use-case scenario may relate to a similar all-off action, but characterized by an additional walkway assistance, e.g. for lighting a path when leaving the building or retiring to a bedroom. For example, such use-case scenario may have a controllable parameter associated therewith for selecting a timeout for the walkway assistance mode.

A use-case scenario may also relate to a complex behavior capable of taking different embodiments of a specific type of addressable element 111,112 appropriately into account when defining a behavior. For example, a use-case scenario may define a motion detector that can handle different models or types of sensors to produce a standardized output trigger indicative of motion and/or presence of a person, e.g. in the form of a state of a virtual output node provided by an instantiation of the use-case scenario. For example, a motion detector use-case scenario may be adapted for processing an input provided by a miniature passive infrared (PIR) sensor, for processing an input provided by an outdoor PIR sensor, and/or for processing an input provided by an indoor wall PIR sensor. Furthermore, a motion detector use-case scenario may be adapted for processing an input provided by other sensor devices, e.g. a camera system, e.g. a security camera, a laser diode gate, an ultrasound range detector, a laser range finder, or other such sensor devices that can be used for indicating the presence or absence of a person.

For example, different use-case scenarios may be adapted for handling different types of such sensor and generating a standardized (virtual) output signal that can be interchangeably used by another use-case scenario requiring such standardized motion sensor input. Alternatively, a single use-case scenario can be adapted for requiring a generic motion sensor input, and may adapt its behavior dependent on the specific implementation of the generic motion sensor that was assigned to the generic input.

A use-case scenario may also relate to, for example, a presence simulation, e.g. adapted for controlling lights, curtains, shutters and/or other addressable elements to simulate the presence of an inhabitant or user of the building in his or her absence. It is a further advantage of embodiments of the present invention that complex behavior may be implemented easily, for example where such complex behavior may require a complex control algorithm, e.g. to provide randomized or constrained stochastic behavior. For example, a presence simulation could be adapted to monitor activity of lights and other devices of interest on the electrical system 99 when the user is present, and use the gathered statistical data to generate a randomized behavior pattern that is commensurate with a probability distribution associated with patterns of normal behavior when the user is present.

A use-case scenario may relate to an access control scenario, e.g. for configuring an access authentication using an outdoor video door station. Another access control scenario may for example relate to a bell-button configuration of such video door station. Another access control scenario could relate to a call and enter action, e.g. which may be triggered by a telephone network interface and/or by triggering a virtual input node directly using a network or internet connection to the control unit.

Another exemplary use-case scenario may relate to an alarm. Such alarm scenario may define various types of addressable elements for acting as inputs. For example, a generic push-button may be required for controlling and enabling and disabling of the alarm. Such generic push-button may also be implemented as a virtual input node, which for example can be triggered using a touch interface or by an output of another use-case scenario.

A virtual input node may be optionally included to trigger the alarm, e.g. receiving an output of a touch interface, e.g. a panic button, or receiving an output of another use-case scenario.

A motion detector, such as a virtual output node of the motion detector use-case scenarios described hereinabove, may be required, or optionally included, for triggering the alarm in response to a detected movement. A door contact trigger may be required, or optionally included, for triggering the alarm in response to the opening of a door. A light may be required, or optionally included, for being switched on during a pre-alarm phase. A light may be required, or optionally included, for being switched on when the alarm is triggered. A light may be required, or optionally included, for blinking when the alarm is triggered. A motor may be required, or optionally included, for actuating shutters when the alarm is triggered. Such use-case scenario may further define parameters that can be changed by the user during configuration. For example, a Boolean value parameter may indicate a preference of closing or opening connected shutters in response to triggering the alarm. Parameters may be included in such scenario for controlling, for example, a time between activating the alarm and an armed state of the alarm, a time between detecting an intruder and activating an alarm state, a timeout during which the alarm state remains active, an alert text string, e.g. to send to a touch interface or smartphone app via push-notification and/or a blink period. Furthermore, the states of the alarm, e.g. inactive, active and triggered, may be exposed via a virtual output node.

Each use-case scenario comprises a definition of a plurality of types of elements required for said use-case scenario.

Each use-case scenario further comprises a plurality of interrelated actions defining behaviors of elements of the defined types, in which each action defines a behavior of at least one of said elements acting as an output node as a function of a status of at least one of said elements acting as an input node.

The plurality of types of elements comprises at least two of: a virtual input node, a virtual output node and/or a type of addressable element 111,112 of the programmable electrical system 99 that is capable of acting as an input node and/or as an output node.

For example, a type of element may comprise a virtual input type, in which this virtual input type can be virtually connected to a virtual output of another, or even of the same, use-case scenario. Likewise, a type of element may comprise a virtual output type, in which this virtual output type can be virtually connected to a virtual input of another, or even of the same, use-case scenario. The use of 'virtual' refers to the configuration of a link between an output state and an input state without directly involving an addressable element of the programmable electrical system 99, e.g. different from the processing unit 100, that is capable of acting as an input node and/or as an output node. Thus, such link does not directly involve an addressable element of the electrical system to generate the input directly, e.g. without further processing, and does not directly involve an addressable element of the electrical system for receiving the output directly, e.g. without further processing.

A type of element may comprise an addressable element 111 of the programmable electrical system 99 that is capable of acting as an input node for providing an input to the processing unit 100, such as a button, a thermostat, a sensor, or a similar device that can output a value relevant for automating an electrical system 99 of a building, such as a home automation system. The type of element may be organized in a hierarchy of types, e.g. the type of element may be specified as a general value provider, such as an integer value provider, or more specifically as a Boolean output provider, for example more specifically as a two-state button, or even more specifically as a biased two-state button or an unbiased two-state button.

A type of element may comprise an addressable element 112 of the programmable electrical system 99 that is capable of acting as an output node for receiving an output provided by the processing unit 100, such as a light, a heating element, a cooling element, an actuator for moving shades or window dressing, a ventilation unit, or other such known elements for use in the electrical system 99 of a building. The type of element may be organized in a hierarchy of types, e.g. the type of element may be specified as a light, more specifically as a dimmable light, more specifically as a dimmable and color-configurable RGB light.

Each use-case scenario may further comprise a description of the use-case scenario. For example, such description may comprise a description explaining the purpose and/or behaviour of the plurality of interrelated actions, e.g. a description of the behaviour of the plurality of interrelated actions as a coordinated whole.

The use-case scenario may also comprise a description of at least some of the types of elements defined therein.

Some, or even all, use-case scenarios in the library may comprise a definition of at least one internal variable used for implementing the plurality of interrelated actions of the at least one use-case scenario.

Furthermore, in embodiments of the present invention, an internal variable may be flagged as readable from instances of other use-case scenarios. For example, the internal variable may be exported in the form of a virtual output node, when the processing unit 100 processes the use-case scenario, e.g. by a control program 5 executing on the processing unit 100. For example, the internal variable may be exposed via a declaration of a getter function that can be called from outside the context of the use-case scenario to return a value representative of the state of the internal variable.

Some, or even all, use-case scenarios in the library may comprise a definition of at least one parameter used for implementing the plurality of interrelated actions of the at least one use-case scenario.

The use-case scenario may also comprise a default value definition for the at least one parameter, a parameter data type of the at least one parameter, and/or an allowed parameter range for the at least one parameter. The use-case scenario may also comprise a default value definition for the internal variable and/or an internal variable data type of the at least one internal variable.

For example, a parameter or internal variable may have an associated parameter type or internal variable type associated therewith, e.g. selectable from a number of possible parameter types, which may comprise an integer value, e.g. to indicate a light intensity value, an enumeration, such as a Boolean type, a string, e.g. an alert string such as "building is on fire", a time, such as a delay, a calendar object, or other data types known in the art.

In other words, a use-case scenario may optionally define such internal variable or internal variables, and/or such parameter or parameters. Correspondingly, the storage medium 2 may be adapted for storing such optional information and/or the interaction interface may be adapted for retrieving such optional information and taking this optional information into account.

The use-case scenario may comprise executable code for implementing at least one, e.g. each, action of the interrelated actions defining the behavior. For example, such executable code may be stored in a machine language directly executable by the processing unit 100, in a byte-code format executable by the processing unit 100 in conjunction with an intermediate compiler, such as a just-in-time compiler, and/or in a human-readable computer language that is executable by the processing unit 100 in conjunction with an interpreter or script processor. The executable code may be adapted for computing an output state for the at least one of the elements that acts as output node for the action, taking into account a state of the at least one of the elements that acts as input node for the action. The executable code may furthermore be adapted for taking a parameter selection for the at least one parameter into account when computing the output state. The executable code may be adapted for taking a value of the at least one internal variable into account when computing the output state. The executable code may be adapted for changing a value of the at least one internal variable when computing the output state.

The executable code may implement each action separately, e.g. as a function, procedure, code block or code object determining the output state for the element(s) that acts as output node for that action, or may implement at least some of the interrelated actions together, e.g. as a function, procedure, code block or code object for determining an output state for at least one element acting as an output node for at least one of the interrelated actions.

The use-case scenario may form a black box construct, in which a descriptive part defines an interface for describing how a user can interact with the use-case scenario through the interaction interface 7, described further hereinbelow, and in which an algorithmic part, e.g. the executable code, defines the interrelated actions or parts thereof. For example, in operation of the electrical system 99, the algorithmic part may be executed by the processing unit 100, e.g. called by a control program 5 configured by the interaction interface 7.

The processing unit 100 further comprises an interaction interface 7 for presenting an overview of at least a part of the use-case scenarios available in the library to a user. For example, the interaction interface 7 may connect to the data communication network 130, e.g. via a wired or wireless Ethernet connection. For example the interaction interface 7 may connect the processing unit 100 to a configuration terminal 140. The interaction interface 7 may render a graphical user interface 150 on the configuration terminal 140.

The interaction interface 7 is further adapted for enabling the user to select one of the presented use-case scenarios. The interaction interface 7 may, for example, enable the user to select a use-case scenario from a list of available use-case scenarios in accordance with the content of the library. This list may be a full listing or may be filtered, e.g. by applying search terms, tags or using a hierarchical browsing system, e.g. by expanding sections of a tree in which the use-case scenarios are organized. For example, the library may optionally store, for each use-case scenario, corresponding tags, searchable strings, or identifiers for indicating a position in a hierarchical browsing system, e.g. a parent node identifier in such tree. The use-case scenario may be presented to the user in a graphical user interface 150, e.g. as part of such list. This presentation may comprise the display of an icon or monogram, e.g. using an icon or monogram in combination with a text string identifier. Such icon or monogram may optionally be stored in the library for each of the use-case scenarios. Alternatively, an icon or monogram associated with a parent node in a hierarchical structure, or a set of icons or monograms associated with a path of parent and ancestral nodes, may be displayed. For example, such icon or monogram associated with a parent and/or ancestral node may be stored separately from the library, e.g. as a separately indexed file or table in the storage 2.

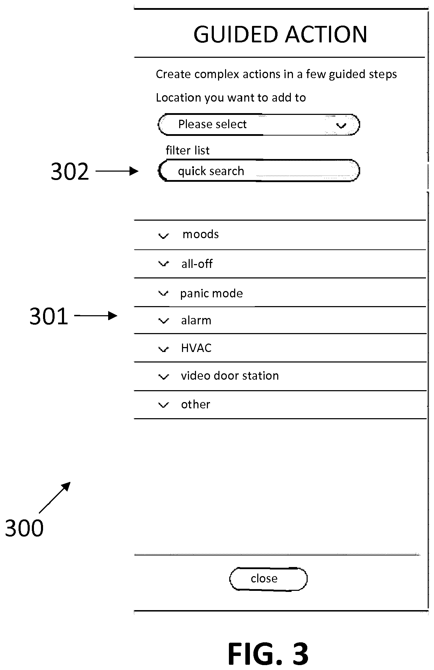

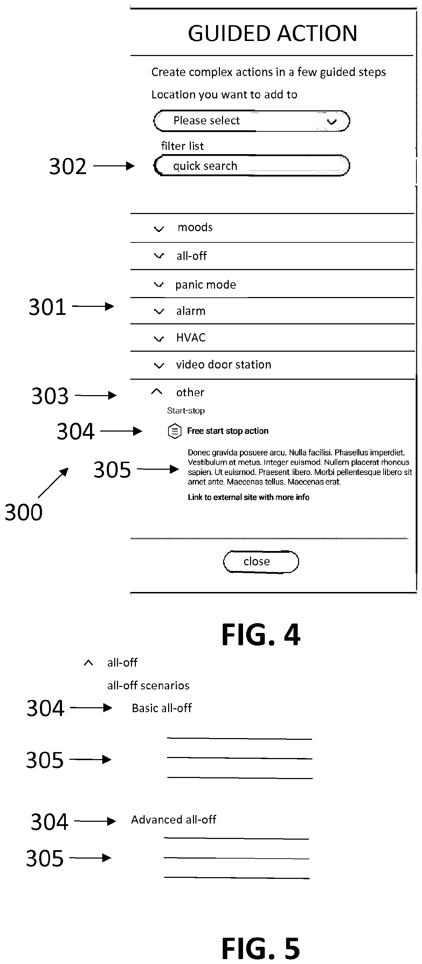

Referring to FIG. 3, an exemplary user interface screen 300, e.g. a window, dialog or part thereof, is shown that may be presented to the user by the interaction interface 7. The interaction interface 7 may enable the user to select a use-case scenario from a list 301 of available use-case scenarios in accordance with the content of the library. This list may be filtered, e.g. using at least one filter control element 302. As shown in FIG. 3 and FIG. 4, the list may be presented in the form of a tree having collapsed nodes that are expandable to show child nodes of a selected parent node 303. In the example shown in FIG. 3 and FIG. 4, a parent node 303, e.g. 'other', may have at least one single child node 304, e.g. 'free start stop action'. In another example, shown in FIG. 5, another parent node 303 may be expanded, e.g. 'all-off', may be expanded to reveal two child nodes 304, e.g. 'basic all-off' and 'advanced all-off'.

For example, the interaction interface 7 may be adapted for communicating a description 305, e.g. stored in the library, of a selected use-case scenario to the user, e.g. a description 305 as referred to hereinabove.

The interaction interface 7 may be adapted for communicating the plurality of types of elements required for a selected use-case scenario, e.g. stored in the library, to the user. The interaction interface 7 may be adapted for providing a description 305 of these types of elements, e.g. describing function, visual representation, use, appearance and/or possible embodiments of such type. For example, such description 305 may be a generic description determined by the type, or may be a description included in the library for the selected use-case scenario specifically.

The interaction interface 7 may be adapted for providing a description 305 of required or optional parameters, e.g. at least one parameter as defined by the use-case scenario stored in the library.

The interaction interface 7 is adapted for configuring an instance of the selected use-case scenario by interactively presenting the user with choices and/or options relating to the use-case scenario.

Referring to FIG. 6, the interaction interface 7 may be adapted for presenting a representation 500, e.g. a graphical representation, of a layout of the programmable electrical system 99 to the user. For example, this layout may comprise a plurality of distinct locations 501, which, for example, may correspond to physical rooms in the building.

The interaction interface 7 may be adapted to enable the user to select elements in the representation 500 of the layout that correspond to each type of the plurality of types of elements required for the selected use-case scenario.

The interaction interface 7 may be adapted for selecting a location 502 corresponding to one of the plurality of distinct locations 501 illustrated in the representation 500. The interaction interface 7 may be adapted for making only elements in the representation 500 available for selection that correspond to the selected location 502.

The interaction interface 7 may furthermore be adapted to provide prompts 504 to the user while enabling the user to select such elements. The interaction interface 7 may be adapted to indicate suitable elements, e.g. by highlighting, in the representation of the layout that correspond to a specific type, e.g. that are selectable as elements in the representation 500 as corresponding to each type of the plurality of types.

The interaction interface 7 may also enable the user to select parameter values for parameters defined by the use-case scenario and/or for parameters that are intrinsic for a particular type of addressable element, e.g. using interface elements 505 for parameter adjustment. The use-case scenario may define a parameter as a global parameter for an instance of the use-case scenario and/or as a parameter to be attributed a value for each addressable element 111,112 of a particular type.

In a second aspect, the present invention also relates to a method for configuring a programmable electrical system 99 in a building, in which the electrical system 99 comprises a plurality of addressable elements 111,112 and a processing unit 100 for controlling the programmable electrical system 100.

The method comprises accessing a digital library of use-case scenarios, wherein each use-case scenario comprises a definition of a plurality of types of elements required for said use-case scenario. Each use-case scenario further comprises a plurality of interrelated actions defining behaviors of elements of these types. Each action defines a behaviour of at least one of the elements acting as an output node as a function of a status of at least one of the elements acting as an input node.

For each stored use-case scenario, the plurality of types of elements comprises at least two of a virtual input node, a virtual output node and/or a type of addressable element 111,112 of the programmable electrical system 99 that is capable of acting as an input node and/or an output node. For example, a plurality of instances of the same or different use-case scenarios may be virtually linked by linking a virtual output node of a first instance to a virtual input node of a second instance.

The method also comprises presenting an overview of at least a part of the use-case scenarios in the digital library to a user; enabling the user to select one of the presented use-case scenarios and configuring an instance of the selected use-case scenario by interactively presenting the user with choices and/or options relating to the use-case scenario.

The step of configuring may comprise enabling the user to configure a parameter value of a parameter of the selected use-case scenario, wherein the parameter is defined by a definition stored in the digital library for the use-case scenario.

The step of configuring may comprise presenting a representation 500 of a layout of the programmable electrical system 99 to the user, communicating the plurality of types of elements required for the selected use-case scenario to the user, and enabling the user to select elements in the representation 500 of the layout that correspond to each type of the plurality of types of elements required for the selected use-case scenario.

The digital library may further comprise, for at least one use-case scenario, an executable code for implementing at least one action of the interrelated actions defining the said behaviour. The method may further comprise controlling the plurality of addressable elements 111,112 of the programmable electrical system 99 in accordance with the configured instance. This controlling may comprise executing the executable code stored for the use-case scenario corresponding to the configured instance.

In a further aspect, the present invention also relates to a computer program product adapted for executing the steps of a method in accordance with embodiments of the second aspect of the present invention, when the computer program product is run on a computer, e.g. on a processing unit in accordance with embodiments of the first aspect of the present invention.

## Claims

1. A processing unit (100) for controlling a programmable electrical system (99) of a building, said electrical system (99) comprising a plurality of addressable elements (111,112), the processing unit (100) comprising:
- a storage medium (2) comprising a library of scenarios, each scenario being a data construct or a combined data and software construct, said construct combining program logic and configurable properties, wherein each scenario comprises a definition of a plurality of types of elements required for said scenario, wherein each scenario further comprises a plurality of interrelated actions defining behaviors of elements of said types, each action defining a behavior of at least one of said elements acting as an output node as a function of a status of at least one of said elements acting as an input node; and
- an interaction interface (7) for presenting an overview of at least a part of the scenarios in said library to a user and adapted for receiving an input from said user to select one of the presented scenarios and for configuring an instance of said selected scenario by interactively presenting said user with choices and/or options relating to said scenario,
**characterized in that**:
for each scenario, said plurality of types of elements comprises at least two of a virtual input node, a virtual output node and/or a type of addressable element (111,112) of said programmable electrical system (99) that is capable of acting as an input node and/or an output node,
and **in that**:
the interaction interface is adapted for configuring at least one link between at least one virtual output node and at least one virtual input node for routing state information between the instance of the selected scenario and another instance of one of said scenarios.

2. The processing unit (100) of claim 1, wherein said interaction interface (7) is adapted for presenting a representation (500) of a layout of the programmable electrical system (99) to the user.

3. The processing unit (100) of any of the previous claims, wherein said interaction interface (7) is adapted for communicating the plurality of types of elements required for said selected scenario to said user.

4. The processing unit (100) in accordance with a combination of claims 2 and 3, wherein said interaction interface (7) is adapted for receiving an input from said user to select elements in the representation (500) of the layout that correspond to each type of the plurality of types of elements required for the selected scenario.

5. The processing unit (100) of claim 3 or 4, wherein said interaction interface (7) is adapted for providing a description of said plurality of types of elements to said user to describe a function, a use, an appearance and/or exemplary elements of said type.

6. The processing unit (100) of any of the previous claims, wherein said library further comprises, for at least one scenario, a definition of at least one internal variable used for implementing said plurality of interrelated actions of said at least one scenario.

7. The processing unit (100) of any of the previous claims, wherein said library further comprises, for at least one scenario, a definition of at least one parameter used for implementing said plurality of interrelated actions of said at least one scenario.

8. The processing unit (100) of any of the previous claims, wherein said library further comprises, for at least one scenario, an executable code for implementing at least one action of said interrelated actions defining said behavior.

9. The processing unit (100) of claim 8, wherein said library further comprises, for at least one scenario, a descriptive part for defining an interface for describing how said user can interact with the scenario through the interaction interface (7), and an algorithmic part comprising said executable code.

10. The processing unit (100) of any of the previous claims, wherein said processing unit (100) further comprises a control program (5) for controlling said plurality of addressable elements (111,112) of said programmable electrical system (99), wherein said control program (5) is configured by said interaction interface (7).

11. The processing unit (100) in accordance with a combination of claims 9 and 10, wherein, in operation of said electrical system (99), said algorithmic part is executed by the processing unit when called by said control program (5).

12. The processing unit of claim 11, wherein said control program (5) is adapted for providing a state corresponding to a virtual output node of a first instance of a scenario as input to a virtual input node of a second instance of the same or a different scenario.

13. A programmable electrical system (99) comprising a plurality of addressable elements (111,112) and a processing unit (100) in accordance with any of the previous claims for controlling said programmable electrical system (99).

14. A method for configuring a programmable electrical system (99) in a building, the electrical system (99) comprising a plurality of addressable elements (111,112) and a processing unit (100) for controlling the programmable electrical system (99), the method comprising:
- accessing a digital library of scenarios, each scenario being a data construct or a combined data and software construct, said construct combining program logic and configurable properties, wherein each scenario comprises a definition of a plurality of types of elements required for said scenario, wherein each scenario further comprises a plurality of interrelated actions defining behaviors of elements of said types, each action defining a behavior of at least one of said elements acting as an output node as a function of a status of at least one of said elements acting as an input node;
- presenting an overview of at least a part of the scenarios in said digital library to a user;
- receiving an input from said user to select one of the presented scenarios; and
- configuring an instance of said selected scenario by interactively presenting said user with choices and/or options relating to said scenario,
**characterized in that** the method further comprises
- configuring at least one link between at least one virtual output node and at least one virtual input node for routing state information between the instance of said selected scenario and another instance of one of said scenarios, and **in that**
for each stored scenario, said plurality of types of elements comprises at least two of a virtual input node, a virtual output node and/or a type of addressable element (111,112) of said programmable electrical system (99) that is capable of acting as an input node and/or an output node.

15. A computer program product adapted for executing the steps of a method in accordance with claim 14 when said computer program product is run on a computer.

## Patentansprüche

1. Verarbeitungseinheit (100) zum Steuern eines programmierbaren elektrischen Systems (99) eines Gebäudes, wobei das elektrische System (99) mehrere adressierbare Elemente (111, 112) umfasst, wobei die Verarbeitungseinheit (100) Folgendes umfasst:
- ein Speichermedium (2), das eine Bibliothek von Szenarien umfasst, wobei jedes Szenario ein Datenkonstrukt oder ein kombiniertes Daten- und Softwarekonstrukt ist, wobei das Konstrukt Programmlogik und konfigurierbare Eigenschaften kombiniert, wobei jedes Szenario eine Definition mehrerer Arten von Elementen umfasst, die für das Szenario erforderlich sind, wobei jedes Szenario ferner mehrere miteinander in Beziehung stehende Vorgänge umfasst, die Verhalten von Elementen der genannten Arten definieren, wobei jeder Vorgang ein Verhalten von wenigstens einem der Elemente definiert, das als ein Ausgabeknoten in Abhängigkeit von einem Status von wenigstens einem der Elemente wirkt, die als ein Eingabeknoten wirken; und
- eine Interaktionsschnittstelle (7) zum Präsentieren wenigstens eines Teils der Szenarien in der Bibliothek für einen Benutzer und geeignet zum Empfangen einer Eingabe von dem Benutzer, um eines der dargestellten Szenarien auszuwählen, und zum Konfigurieren einer Instanz des ausgewählten Szenarios durch interaktives Präsentieren des Benutzers mit Wahlmöglichkeiten und/oder Optionen in Bezug auf das Szenario,
**dadurch gekennzeichnet, dass**:
für jedes Szenario die mehreren Elementarten wenigstens zwei von einem virtuellen Eingabeknoten, einem virtuellen Ausgabeknoten und/oder einer Art eines adressierbaren Elements (111, 112) des programmierbaren elektrischen Systems (99) umfassen, das in der Lage ist, als ein Eingabeknoten und/oder ein Ausgabeknoten zu wirken,
und dadurch, dass:
die Interaktionsschnittstelle zum Konfigurieren wenigstens einer Verbindung zwischen wenigstens einem virtuellen Ausgabeknoten und wenigstens einem virtuellen Eingabeknoten geeignet ist, zum Weiterleiten von Statusinformationen zwischen der Instanz des ausgewählten Szenarios und einer anderen Instanz eines der Szenarien.

2. Verarbeitungseinheit (100) nach Anspruch 1, wobei die Interaktionsschnittstelle (7) zum Präsentieren einer Darstellung (500) eines Layouts des programmierbaren elektrischen Systems (99) für den Benutzer geeignet ist.

3. Verarbeitungseinheit (100) nach einem der vorhergehenden Ansprüche, wobei die Interaktionsschnittstelle (7) zum Kommunizieren der mehreren für das ausgewählte Szenario erforderlichen Elementarten an den Benutzer geeignet ist.

4. Verarbeitungseinheit (100) nach einer Kombination der Ansprüche 2 und 3, wobei die Interaktionsschnittstelle (7) zum Empfangen einer Eingabe von dem Benutzer geeignet ist, um Elemente in der Darstellung (500) des Layouts auszuwählen, die jeder Art der mehreren Elementarten entsprechen, die für das ausgewählte Szenario erforderlich sind.

5. Verarbeitungseinheit (100) nach Anspruch 3 oder 4, wobei die Interaktionsschnittstelle (7) zum Bereitstellen einer Beschreibung der mehreren Elementarten gegenüber dem Benutzer geeignet ist, um eine Funktion, eine Verwendung, ein Erscheinungsbild und/oder beispielhafte Elemente dieser Art zu beschreiben.

6. Verarbeitungseinheit (100) nach einem der vorhergehenden Ansprüche, wobei die Bibliothek ferner für wenigstens ein Szenario eine Definition von wenigstens einer internen Variablen umfasst, die zum Implementieren der mehreren miteinander in Beziehung stehenden Vorgänge des wenigstens einen Szenarios verwendet wird.

7. Verarbeitungseinheit (100) nach einem der vorhergehenden Ansprüche, wobei die Bibliothek ferner für wenigstens ein Szenario eine Definition von wenigstens einem Parameter umfasst, der zum Implementieren der mehreren miteinander in Beziehung stehenden Vorgänge des wenigstens einen Szenarios verwendet wird.

8. Verarbeitungseinheit (100) nach einem der vorhergehenden Ansprüche, wobei die Bibliothek ferner für wenigstens ein Szenario einen ausführbaren Code zum Implementieren wenigstens einer Einwirkung der miteinander in Beziehung stehenden Vorgänge, die das Verhalten definieren, umfasst.

9. Verarbeitungseinheit (100) nach Anspruch 8, wobei die Bibliothek ferner für wenigstens ein Szenario einen beschreibenden Teil zum Definieren einer Schnittstelle zum Beschreiben, wie der Benutzer durch die Interaktionsschnittstelle (7) mit dem Szenario interagieren kann, und einen algorithmischen Teil, der den ausführbaren Code umfasst, umfasst.

10. Verarbeitungseinheit (100) nach einem der vorhergehenden Ansprüche, wobei die Verarbeitungseinheit (100) ferner ein Steuerprogramm (5) zum Steuern der mehreren adressierbaren Elemente (111, 112) des programmierbaren elektrischen Systems (99) umfasst, wobei das Steuerprogramm (5) durch die Interaktionsschnittstelle (7) konfiguriert ist.

11. Verarbeitungseinheit (100) nach einer Kombination der Ansprüche 9 und 10, wobei im Betrieb des elektrischen Systems (99) der algorithmische Teil von der Verarbeitungseinheit ausgeführt wird, wenn er von dem Steuerprogramm (5) aufgerufen wird.

12. Verarbeitungseinheit nach Anspruch 11, wobei das Steuerprogramm (5) zum Bereitstellen eines Zustands, der einem virtuellen Ausgabeknoten einer ersten Instanz eines Szenarios entspricht, als Eingabe in einen virtuellen Eingabeknoten einer zweiten Instanz desselben oder eines unterschiedlichen Szenarios geeignet ist.

13. Programmierbares elektrisches System (99), umfassend mehrere adressierbare Elemente (111, 112) und eine Verarbeitungseinheit (100) nach einem der vorhergehenden Ansprüche zum Steuern des programmierbaren elektrischen Systems (99).

14. Verfahren zum Konfigurieren eines programmierbaren elektrischen Systems (99) in einem Gebäude, wobei das elektrische System (99) mehrere adressierbare Elemente (111, 112) und eine Verarbeitungseinheit (100) zum Steuern des programmierbaren elektrischen Systems (99) umfasst, wobei das Verfahren umfasst:
- Zugreifen auf eine digitale Bibliothek von Szenarien, wobei jedes Szenario ein Datenkonstrukt oder ein kombiniertes Daten- und Softwarekonstrukt ist, wobei das Konstrukt Programmlogik und konfigurierbare Eigenschaften kombiniert, wobei jedes Szenario eine Definition mehrerer Arten von Elementen umfasst, die für das Szenario erforderlich sind, wobei jedes Szenario ferner mehrere miteinander in Beziehung stehende Vorgänge umfasst, die Verhalten von Elementen der genannten Arten definieren, wobei jeder Vorgang ein Verhalten von wenigstens einem der Elemente definiert, das als ein Ausgabeknoten in Abhängigkeit von einem Status von wenigstens einem der Elemente wirkt, die als ein Eingabeknoten wirken;
- Präsentieren eines Überblicks über wenigstens einen Teil der Szenarien in der digitalen Bibliothek für den Benutzer;
- Empfangen einer Eingabe von dem Benutzer, um eines der dargestellten Szenarien auszuwählen; und
- Konfigurieren einer Instanz des ausgewählten Szenarios durch interaktives Präsentieren des Benutzers mit Wahlmöglichkeiten und/oder Optionen in Bezug auf das Szenario, **dadurch gekennzeichnet, dass** das Verfahren ferner umfasst:
- Konfigurieren wenigstens einer Verbindung zwischen wenigstens einem virtuellen Ausgabeknoten und wenigstens einem virtuellen Eingabeknoten zum Weiterleiten von Statusinformationen zwischen der Instanz des ausgewählten Szenarios und einer anderen Instanz eines der Szenarien, und dadurch, dass
für jedes gespeicherte Szenario die mehreren Elementarten wenigstens zwei von einem virtuellen Eingabeknoten, einem virtuellen Ausgabeknoten und/oder einer Art eines adressierbaren Elements (111, 112) des programmierbaren elektrischen Systems (99) umfassen, das in der Lage ist, als ein Eingabeknoten und/oder ein Ausgabeknoten zu wirken.

15. Computerprogrammprodukt, das zum Ausführen der Schritte eines Verfahrens nach Anspruch 14 geeignet ist, wenn das Computerprogrammprodukt auf einem Computer laufengelassen wird.

## Revendications

1. Unité de traitement (100) pour commander un système électrique programmable (99) d'un bâtiment, ledit système électrique (99) comprenant une pluralité d'éléments adressables (111, 112), l'unité de traitement (100) comprenant :
- un moyen de stockage (2) comprenant une bibliothèque de scénarios, chaque scénario étant une construction de données ou une construction combinée de données et de logiciel, ladite construction combinant une logique de programme et des propriétés configurables, chaque scénario comprenant une définition d'une pluralité de types d'éléments requis pour ledit scénario, chaque scénario comprenant en outre une pluralité d'actions interdépendantes définissant des comportements d'éléments desdits types, chaque action définissant un comportement d'au moins un desdits éléments agissant en tant que nœud de sortie en fonction d'un état d'au moins un desdits éléments agissant en tant que nœud d'entrée ; et
- une interface d'interaction (7) pour présenter à un utilisateur une vue d'ensemble d'au moins une partie des scénarios de ladite bibliothèque et conçue pour recevoir une entrée dudit utilisateur afin de sélectionner l'un des scénarios présentés et de configurer une instance dudit scénario sélectionné par présentation interactive audit utilisateur des choix et/ou options se rapportant audit scénario,
**caractérisée en ce que** :
pour chaque scénario, ladite pluralité de types d'éléments comprend au moins deux éléments parmi un nœud d'entrée virtuel, un nœud de sortie virtuel et/ou un type d'élément adressable (111, 112) dudit système électrique programmable (99) qui est capable d'agir en tant que nœud d'entrée et/ou un nœud de sortie,
et **en ce que** :
l'interface d'interaction est conçue pour configurer au moins une liaison entre au moins un nœud de sortie virtuel et au moins un nœud d'entrée virtuel pour le routage d'informations d'état entre l'instance du scénario sélectionné et une autre instance de l'un desdits scénarios.

2. Unité de traitement (100) selon la revendication 1, dans laquelle ladite interface d'interaction (7) est conçue pour présenter une représentation (500) d'un agencement du système électrique programmable (99) à l'utilisateur.

3. Unité de traitement (100) selon l'une quelconque des revendications précédentes, dans laquelle ladite interface d'interaction (7) est conçue pour communiquer la pluralité de types d'éléments requis pour ledit scénario sélectionné audit utilisateur.

4. Unité de traitement (100) selon une combinaison des revendications 2 et 3, dans lequel ladite interface d'interaction (7) est conçue pour recevoir une entrée dudit utilisateur afin de sélectionner des éléments dans la représentation (500) de l'agencement qui correspondent à chaque type de la pluralité de types d'éléments requis pour le scénario sélectionné.

5. Unité de traitement (100) selon la revendication 3 ou 4, dans laquelle ladite interface d'interaction (7) est conçue pour fournir une description de ladite pluralité de types d'éléments audit utilisateur pour décrire une fonction, une utilisation, une apparence et/ou des éléments représentatifs dudit type.

6. Unité de traitement (100) selon l'une quelconque des revendications précédentes, dans laquelle ladite bibliothèque comprend en outre, pour au moins un scénario, une définition d'au moins une variable interne utilisée pour mettre en œuvre ladite pluralité d'actions interdépendantes dudit au moins un scénario.

7. Unité de traitement (100) selon l'une quelconque des revendications précédentes, dans laquelle ladite bibliothèque comprend en outre, pour au moins un scénario, une définition d'au moins un paramètre utilisé pour mettre en œuvre ladite pluralité d'actions interdépendantes dudit au moins un scénario.

8. Unité de traitement (100) selon l'une quelconque des revendications précédentes, dans laquelle ladite bibliothèque comprend en outre, pour au moins un scénario, un code exécutable pour mettre en œuvre au moins une action desdites actions interdépendantes définissant ledit comportement.

9. Unité de traitement (100) selon la revendication 8, dans laquelle ladite bibliothèque comprend en outre, pour au moins un scénario, une partie descriptive servant à définir une interface pour décrire comment ledit utilisateur peut interagir avec le scénario par l'intermédiaire de l'interface d'interaction (7), et une partie algorithmique comprenant ledit code exécutable.

10. Unité de traitement (100) selon l'une quelconque des revendications précédentes, dans laquelle ladite unité de traitement (100) comprend en outre un programme de commande (5) pour commander ladite pluralité d'éléments adressables (111, 112) dudit système électrique programmable (99), ledit programme de commande (5) étant configuré par ladite interface d'interaction (7).

11. Unité de traitement (100) selon une combinaison des revendications 9 et 10, dans laquelle, lors du fonctionnement dudit système électrique (99), ladite partie algorithmique est exécutée par l'unité de traitement lorsqu'elle est appelée par ledit programme de commande (5).

12. Unité de traitement selon la revendication 11, dans laquelle ledit programme de commande (5) est conçu pour fournir un état correspondant à un nœud de sortie virtuel d'une première instance d'un scénario en tant qu'entrée à un nœud d'entrée virtuel d'une seconde instance d'un scénario identique ou différent.

13. Système électrique programmable (99) comprenant une pluralité d'éléments adressables (111, 112) et une unité de traitement (100) selon l'une quelconque des revendications précédentes pour commander ledit système électrique programmable (99).

14. Procédé de configuration d'un système électrique programmable (99) dans un bâtiment, le système électrique (99) comprenant une pluralité d'éléments adressables (111, 112) et une unité de traitement (100) pour commander le système électrique programmable (99), le procédé comprenant :
- l'accès à une bibliothèque numérique de scénarios, chaque scénario étant une construction de données ou une construction combinée de données et de logiciel, ladite construction combinant une logique de programme et des propriétés configurables, chaque scénario comprenant une définition d'une pluralité de types d'éléments requis pour ledit scénario, chaque scénario comprenant en outre une pluralité d'actions interdépendantes définissant des comportements d'éléments desdits types, chaque action définissant un comportement d'au moins un desdits éléments agissant en tant que nœud de sortie en fonction d'un état d'au moins un desdits éléments agissant en tant que nœud d'entrée ;
- la présentation à un utilisateur d'une vue d'ensemble d'au moins une partie des scénarios de ladite bibliothèque numérique ;
- la réception d'une entrée provenant dudit utilisateur afin de sélectionner l'un des scénarios présentés ; et
- la configuration d'une instance dudit scénario sélectionné par présentation interactive audit utilisateur des choix et/ou options se rapportant audit scénario, **caractérisé en ce que** le procédé comprend en outre
- la configuration d'au moins une liaison entre au moins un nœud de sortie virtuel et au moins un nœud d'entrée virtuel pour le routage d'informations d'état entre l'instance dudit scénario sélectionné et une autre instance de l'un desdits scénarios, et **en ce que**
pour chaque scénario stocké, ladite pluralité de types d'éléments comprend au moins deux éléments parmi un nœud d'entrée virtuel, un nœud de sortie virtuel et/ou un type d'élément adressable (111, 112) dudit système électrique programmable (99) qui est capable d'agir en tant qu'un nœud d'entrée et/ou un nœud de sortie.

15. Produit de programme informatique conçu pour exécuter les étapes d'un procédé selon la revendication 14, lorsque ledit produit de programme informatique est exploité sur un ordinateur.
